# EUROPEAN PATENT SPECIFICATION

(11) **EP 2 630 173 B1**
(45) Date of publication and mention of the grant of the patent: **07.01.2015**
(21) Application number: 11785348.1
(22) Date of filing: 17.10.2011
(51) Int. Cl.: C08G 12/40, C09D 5/00, D21H 17/00

(54) **COLLOIDAL AMINOTRIAZINE-ALDEHYDE CONDENSATES AND THEIR USE AS ALDEHYDE SCAVENGER**
KOLLOIDALE AMINOTRIAZIN-ALDEHYDKONDENSATE UND IHRE VERWENDUNG ALS ALDEHYDFÄNGER
CONDENSATS COLLOÏDAUX D'AMINOTRIAZINE-ALDÉHYDE ET LEUR UTILISATION À TITRE D'INTERCEPTEURS D'ALDÉHYDE

(30) Priority: 19.10.2010 EP 10188064
(43) Date of publication of application: 28.08.2013
(73) Proprietor: Borealis Agrolinz Melamine GmbH, 4021 Linz (AT)
(72) Inventor: PANZER, Ulf, A-4320 Perg (AT); DORNER, Florian, A-3300 Amstetten (AT); BERGER, Doris, A-1080 Wien (AT); MÜLLER, Uwe, A-4222 Luftenberg (AT)
(74) Representative: Morawski, Birgit
(86) International application number: PCT/EP2011/068057
(87) International publication number: WO 2012/052375

(56) References cited:
- WO-A1-98/03594
- GB-A- 858 545
- US-A- 2 863 842
- US-A- 2 986 489
- US-A- 5 989 391
- US-A1- 2008 193 758
- US-B1- 6 207 791

## Description

The present invention relates to colloidal aminotriazine condensates according to claim 1, a method for obtaining the same according to claim 6, the use of colloidal aminotriazine condensates as aldehyde scavenger according to claim 7 and as curing agent according to claim 10, a resin containing said condensates according to claim 12, wood based panels containing said condensates according to claim 11 and containing said resin according to claim 13 and a method for obtaining said wood based panels according to claim 14.

Formaldehyde containing binders and adhesives are widely used in the wood processing industry and thus in the production of wood based panels (WBP), like chipboards or particle boards, oriented strand boards (OSB), low density fibre boards (LDF), middle density fibre boards (MDF), high density fibre boards (HDF) or plywood.

Typical binders or adhesives include urea-formaldehyde resins (UF), melamine-reinforced-urea-formaldehyde resins (MUF), melamine-formaldehyde resins (MF), melamine-urea-phenol-formaldehyde resins (MUPF), phenol-formaldehyde resins (PF) and phenol-urea-formaldehyde resins (PUF). The distribution of the total amount of binders and adhesives in the production of wood based panels can be estimated as 80-85% UF including MUF; 10-15 MUF/MUPF; 5% PF and PUF and 1-2% isocyanates.

However, this distribution is changing since more stringent limitations regarding the formaldehyde emissions of wood based panels come into force (F****; CARB). For the production of low emission boards basically only a few resins are suitable, like melamine fortified UF resins, PF resins and polymeric diphenylmethandiisocyante (PMDI). Nevertheless, only PF and PMDI reach the low emission potential for formaldehyde emission like natural wood.

However, UF and PF resins are the most preferably used binders for several wood bonding purposes due to their excellent performance/cost ratio. In 2007 Dynea presented the "AsWood™- Protein Modified Phenol-Formaldehyde Resins" project. The AsWood™ technology is successfully commercialised and prove that the production of panels with formaldehyde emissions like natural wood is possible without PMDI and with formaldehyde based resins.

Nevertheless, the trend of low cost and cost effective production as well as the requirements regarding a low formaldehyde emission calls for highly reactive resins having reduced press times at lower temperatures and low or zero formaldehyde emission. There are considerable constraints for the particle board industry to provide resin systems suitable for the production of boards with emissions distinctly below actual limits.

Various approaches have been used in the past to reduce formaldehyde emission from formaldehyde based resins and the WBP manufactured thereof.

One approach for formaldehyde reduction often applied in the past is the application of formaldehyde scavengers. These are substances able to reduce formaldehyde emissions by reacting with free formaldehyde. The most commonly used formaldehyde scavengers include for instance urea ("Holzwerkstoffe und Leime. Technologie und Einflussfaktoren, Dunky, M; Niemz, P., Springer Verlag, Auflage 1, ISBN-10: 3540429808, melamine (WO 2006/127818 A1), substituted urea, alkylated melamine, urethane, guanidine, aliphatic amines and amides (WO 2006/134083 A1), amino acids like lysine, glycine, serine, allantoin, ascorbic acid, glucose, pyrogallol and many more (WO 2007/091223 A1). In all cases the properties of the produced particle boards or the processing behaviour are changed significantly to lower performance.

Other prior art relates to further methods and approaches. For example, WO 98/03594 A1 describes an intumescent composition containing an acid cured melamine-formaldehyde resin, wherein the resin is cured using a nitrogen-containing acidic phosphorous curing agent and to an aqueous composition of a curable melamine-formaldehyde resin and a nitrogen-containing acidic phosphorous curing agent.

US 5,989,391 relates to a product obtained by reacting a sulfonated amino resin and an amino group-containing substance. The sulfonated amino resin is obtained by mixing an amino group containing substance such as melamine, with 0.9-1.1 mols of formaldehyde and sulfite, heating the mixture followed by the addition of amidosulfonic acid and/or sulfuric acid to the pH of 4-6, heating the reaction mixture at 40-60°C for 50-300 minutes and immediately adjusting the pH to 11.5-13.5. The final composition is obtained by heating the mixtures of sulfonated amino resin and amino group containing substance to 50-150°C, then a catalyst such as sulfuric acid is added and the final product is stabilized by adding an alkaline substance. The product is used in paper making process as retention aid. It can be further used as a dispersant for inorganic powders, anti-dusting agent, anti-static agent or water-reducing agent. The product is a colloidal compound with a primary particle diameter of 1-100 nm. The colloid is amphoteric having a negative charge attributable to the sulfonic acid groups and cationic sites attributable to the amino groups. The zeta potential ranges from 0 to -60 mV.

GB 858,545 relates to a melamine-formaldehyde resin with sulphonate groups for use in a paper making process. The resin is obtained by acidifying a solution of melamine-formaldehyde- resin containing sulphonate groups with 2.5-4.5 mols of formaldehyde per mol of melamine to a pH of 0.5-3.5 and heating the solution ("ageing"). Thus, the resin of D3 comprises a strong excess of formaldehyde.

US 2,863,842 discloses a sulfite modified melamine-formaldehyde resin prepared by 1 mole melamine with 3-4 mole formaldehyde and salts of sulfurous acids. These resins are then converted to cationic resins in the presence of strong acids (column 1, lines 58-72). The cationic resins are turned after heating into a colloid (column 4, lines 65-71). The resins are being used in the paper making industry.

US 2,986,489 is directed to a cationic melamine-formaldehyde resin colloid having increased wet strengthening action on cellulosic papermaking fibers. The resin colloid is typically obtained by adding 1-5 mol formaldehyde to a melamine-formaldehyde condensation product such as trimethylolmelamine, adding an acid such as hydrochloric acid and ageing the solution. When using trimethylolmelamine a melamine-formaldehyde product is preferably used having a melamine: formaldehyde ratio of 1 : 3 to which further formaldehyde is added. The resin colloid can also be obtained by reacting 1 mol of melamine with 4-10 mol of aqueous 37% formaldehyde followed by adjusting the pH to 0.5-5 and ageing. In both cases the resin colloid comprises a large excess of formaldehyde.

US 6,207,791 B1 relates to a partially alkoxymethylated melamine crosslinker composition having 2.6 to 4.6 moles formaldehyde per mole of melamine. When mixing the crosslinker composition and a polyfunctional material a composition with a reduced formaldehyde emission is obtained. The low formaldehyde emitting curable composition is used for coatings

US 2008/0193758 A1 discloses nanoscale fluorescent melamine particles with a particle diameter of 10-95 nm. The nanoscale MF particles are obtained by stirring MF resin having a melamine : formaldehyde ratio of 1:2.8 to 1:3.8 in water at 60-80°C and adding formic acid so that particles having a diameter of 10-95 nm are formed. The fluorescent compound is added to the MF resin before formic acid is added.

The application of the above listed methods for formaldehyde reduction is, however, often accompanied by several disadvantages and drawbacks.

Although Formaldehyde is being classified a carcinogenic material, formaldehyde still remains to be the best cross-linker for UF, MUF resins and can also effectively react with wood-cellulose. In order to reduce the formaldehyde emission urea can be added, what however causes poor water stability and poor mechanics of the applied glue. Furthermore, the reduction of formaldehyde content of glue can cause deterioration of mechanical properties of the glue itself and the wood based panels containing such glue. The addition of melamine as possible aldehyde scavenger reduces productivity and increases costs. Due to the alkaline character of melamine the curing speed is reduced and can only be increased by adding a rather high amount of hardener. Nevertheless the curing speed of UF resins cannot be reached. Furthermore, this high concentration of hardener leads in turn to increased brittleness of wood composites and consequently reduced mechanics properties of the composites.

It is therefore an object of the invention to provide an aldehyde scavenger for a resin, in particular in a resin subsequently used as glue or adhesive in the production of wood based panels, which does not negatively impact the resins curing speed.

These objects and other objects were solved by using colloidal aminotriazine condensates according to claim 1.

Accordingly, a colloidal aminotriazine-aldehyde condensate is being provided, which is characterized in that
- the aminotriazine : aldehyde ratio of the condensate is 1:1,3 to 1:2, preferably 1 : 1,8, most preferably 1 : 1,7,
- said condensate comprises at least one acid in an amount between 50 to 200 mol% based on the melamine content,
- the average particle diameter d₅₀ of said condensate is less than 100 nm, preferably less than 80 nm, most preferably less than 50 nm, as obtained by ultrasonic attenuation measurements in a dispersion technology DT1200 spectrometer at 23°C and
- wherein the colloidal condensate is cationic.

The colloidal aminotriazine-aldehyde condensate is preferably characterized by a zeta-potential between 3 and 50 mV, preferably between 5 and 20 mV. The zeta-potential characterises the electrical charge of the colloidal particles. A high zeta-potential means a stronger charge and therefore a higher repulsion and more stable colloidal particle.

The colloidal aminotriazine-aldehyde condensate is preferably defined as a colloid system wherein the colloid particles are dispersed in water or any other suitable solvent. The colloid particles spread throughout the solvent. The present colloids are reversible.

Colloidal aminotriazine-aldehyde resins are in general known. As early as 1942 a cationic melamine-formaldehyde resin converted into colloidal dispersions was described (US 2,345,543). EP 415 273 B1 discloses a method for obtaining melamine resin particle dispersions whereby the particles have an average diameter between 0,1 to 100 µm. Nanoparticles of melamine-formaldehyde resins with an average diameter between 10 to 95 nm are for instance known from WO 2006/119845 A1. Here melamine-formaldehyde resins having a molar melamine: formaldehyde ratio of 1: 2.8 to 1:3.8 are used. However, so far colloidal aminotriazine-aldehyde resins have typically been used in the field of diagnostics, as adsorption material or detergents.

The colloidal aminotriazine-aldehyde condensates according to the invention, however, can be used as aldehyde scavengers. This is primarily due to their good stability, in particular when mixed with an adhesive and incorporated into wood based panels. Thus, the present colloids do not easily aggregate or if, the aggregation can be reversed in a simple manner.

Furthermore, due to their specific aminotriazine: aldehyde ratio these particles are able to absorb and thus able to scavenge a large amounts of aldehyde. The specific and rather narrow aminotriazine : aldehyde ratio of the present colloidal aminotriazine condensate is very important for its function as aldehyde scavenger. In order to be able to capture free aldehyde, such as formaldehyde, the colloidal aminotriazine condensate has to have free sites where the aldehyde is able to react with the aminotriazine such as melamine. If the for instance per mol melamine more than 2 mol formaldehyde are already bound within the condensate than there are not enough free reaction sites left which would sufficiently bind formaldehyde. Thus, condensates having a larger aminotriazine : aldehyde ratio will not effectively function as aldehyde scavengers.

Furthermore, the colloidal condensates according to the invention do not impair the reactivity and productivity of the formaldehyde resins used as adhesives or glues. The condensate does also not have any negative impact on the curing speed of the glues opposite to the usually applied UF and MUF glues. In contrast, the particles even show curing properties for resins. Another advantage of the present particles is their positive influence of the mechanical properties and swelling behaviour of wood based panels.

In an embodiment of the invention the at least one acid is either an inorganic or an organic acid. The inorganic acid is preferably selected from the group comprising nitric acid, phosphoric acid, sulphuric acid or hydrochloric acid. The organic acid is preferably selected from the group comprising formic acid and acetic acid. The particle size distribution depends strongly on the applied acid. In particular, when using nitric acid, formic acid and hydrochloric acid the colloidal structure shows a narrow particle size distribution, so that relatively small and uniform particles can be received. Thus, the addition of these acids to the precondensate is in particular preferred.

The aminotriazine-aldehyde precondensate is preferably stirred with at least one of the above acids at a temperature between 50 and 100°C for at least 10 min. The acid is added in an amount of 50 to 200 mol% based on the melamine content. The amount of acid added depends strongly on the type of acid used i.e. type of counter ion and acid strength. For instance, if acetic acid and sulphuric acid are used a higher amount between 150 to about 200 mol% is required in order to obtain colloidal particles having a particle size below 100 nm. In case of the inorganic acids hydrochloric acid and nitric acid only small amounts of acid in a range between 50 and 100 mol% based on the melamine content are required to obtain the same result.

The addition of an acid to the precondensate and the subsequent reaction provides a cationic aminotriazine-formaldehyde condensation product. Thus, the colloidal particles of the dispersion carry positive electrical charges on the surface thereof after mixing with an acid.

In a preferred embodiment at least one inorganic and/or at least one organic base is added to the colloidal aminotriazine-aldehyde condensate as modulator or stabilizer. The addition of the base increases the pH up to 4 and thus prevents pre-curing of the glue when mixing it with the colloidal melamine resin in a later process step. The at least one base is preferably selected from a group comprising polyamines, in particular polyethylenimin, monomeric amines, in particular ethanolamine, or ammonia. Monomeric amines, in particular ammonia, are the preferred modulators. The base can be added in an amount between 0.1 to 10 wt%, preferably between 1 to 8 wt%, in particular preferably between 1.5 to 6 wt%.

In an embodiment the aminotrazine is selected from a group comprising melamine and its derivatives, ammeline and its derivatives, ammelide and its derivatives, guanamine and its derivatives. Melamine is however the most preferred aminotriazine.

The melamine derivatives are preferably melamines, diaminomethyltriazines and/or diaminophenyltriazines substituted by hydroxy-C₁-C₁₀-alkyl groups, hydroxy-C₁-C₁₀alkyl(oxa-C₂-C₄-alkyl)₁₋₅ groups and/or by amino-C₁-C₁₂-alkyl groups, preferably 2-(2-hydroxyethylamino)-4,6-diamino-1,3,5-triazine, 2-(5-hydroxy-3-oxapentylamino)-4,6-diamino-1,3,5-triazine, 2,4,6-tris(6-aminohexylamino)-1,3,5-triazine and/or 2,4-(di-5-hydroxy-3-oxapentylamino)-6-methyl-1,3,5-triazine, melem, melon and/or melam.

In an embodiment melamine can be partially replaced by urea. It is also possible to mix the aminotriazine-aldehyde condensate with urea, preferably in amount up to 10 wt%.

The aldehyde used in the colloidal condensate according to the invention is preferably a C1-C8-aldehyde, whereby formaldehyde is in particular preferred.

In a further embodiment at least one partially and/or fully etherified aminotriazine-aldehyde resin is used for synthesizing the colloidal condensate. In a preferred embodiment a C1-C4 alcohol is used for etherification, in particular methanol and butanol. In dependency on the kind and degree of etherification the stability of the colloidal suspension is further improved.

It is also possible to functionalize the surface of the particles in the colloidal aminotriazine-aldehyde suspension. Conceivable functional groups can be selected from a group comprising amino, carboxyl, sulfonic acid, phophonic acid moities which allow for a condensation in the presence of amino acids, amino phosphonic acids, sulfobetaines, proteins, peptides or other functional groups.

The colloidal aminotriazine-aldehyde condensate according to the invention is obtained by a method comprising the steps of:
a) reacting at least one aminotriazine with at least one aldehyde in a ratio 1:1,3 to 1 : 2, preferably 1 : 1,8, most preferably 1 : 1,7 under formation of at least one aminotriazine-aldehyde-precondensate,
b) adding at least one acid to the precondensate, in particular for adjusting the pH to values between 0,5 and 6,
c) heating the mixture of step b), in particular at a temperature between 50 and 100°C for at least 10 min,
d) opt. adding at least one inorganic and/or at least one organic base, and
e) opt. isolating the obtained condensate.

The specific aminotriazine, aldehyde, acid and/or base are the same as described previously.

The purification of the obtained condensate particles can be for instance carried out by filtration with a suitable membrane or filter, by centrifugation or any other suitable method known in the art.

According to the invention, at least one colloidal aminotriazine-aldehyde condensate is used as an aldehyde scavenger, in particular as formaldehyde scavenger. More preferably, at least one colloidal aminotriazine-aldehyde condensate according to the invention is used as aldehyde scavenger, in particular as a formaldehyde scavenger. In particular it is preferred to use the at least one colloidal aminotriazine-aldehyde condensate as an aldehyde scavenger in a formaldehyde resin, for instance in a formaldehyde containing resin or glue, and/or in wood based panels, in particular particle board, OSB, LDF, MDF, HDF and plywood.

By adding the colloidal aminotriazine-aldehyde condensate to a resin and/or wood based panel the aldehyde emission, in particular formaldehyde emission can be reduced up to 50% compared to conventional resins and/or wood based panels.

Thus, the object of the present invention is also being solved by providing a wood based panel comprising at least one colloidal aminotriazine-aldehyde condensate.

An additional function of the colloidal aminotriazine-aldehyde condensate can be seen in supporting the curing agent and/or hardener when adding the colloidal melamine formaldehyde resin to at least one aldehyde containing glue or resin, in particular to a formaldehyde containing glue or resin. In this case it is important, as mentioned before, that a base is added to the colloidal melamine formaldehyde resin as a modulator.

Usually, the hardener used in the aldehyde containing adhesive is preferably selected from a group comprising ammonium salts of acids, in particular of carbonic acids, sulfuric acids, sulfonic acids, hydrochloric acid, phosphoric acid or nitric acid or mixtures of the ammonium salts with their corresponding acids.

By adding the colloidal melamine resin containing a base modulator to the adhesive it is possible to reduce the amount of hardener in the adhesive since the colloidal aminotriazine-aldehyde condensate is able to at least partially replace the hardener. The ability to act as a latent curing agent or hardener is in particular influenced by the way the colloid is stabilized and by the kind of base used as a modulator. For instance, if nitric acid is used for synthesizing the colloidal composition and ammonia is used as the modulator then ammonium nitrate is formed in situ which represents a common hardener. Thus, the colloidal aminotraizine-aldehyde condensate can also be used as a curing agent and/or a hardener.

The object of the present invention is also being solved by a resin or glue, in particular a formaldehyde containing resin or glue, comprising at least one colloidal aminotriazine-aldehyde condensate, in particular at least one colloidal aminotriazine-aldehyde condensate as described above.

The resin or glue according to the invention is obtained by mixing the aldehyde containing glue or resin and the colloidal aminotriazine-aldehyde condensate and simultaneously or subsequently adding at least one inorganic and/or organic base. Another possibility, as described previously, is first mixing the colloidal aminotriazine-aldehyde condensate with the base and then adding the obtained adhesive to the mixture. The obtained resin or glue is stable for at least 30 min up to 10 hours.

In an embodiment such resin or glue comprises
- 0.25 -15 wt% colloidal aminotriazine-aldehyde condensate;
- 0.1 -10 wt% organic and/or inorganic base;
- 50 to 70 wt% aldehyde containing resin;
- 0 to 10 wt% at least one hardener;
- 0 to 10 % further additives, in particular hydrophobic agents, and
- 0 to 50 wt% of a solvent, in particular water.
The object of the present invention is also being solved by a wood based panel comprising such a resin or glue.

A wood based panel comprising at least one condensate or resin according to the invention is obtained by a method having the following steps:
a) adding at least one colloidal aminotriazine aldehyde condensate, in particular according to the invention to an aldehyde containing resin, in particular formaldehyde containing resin,
b) opt. adding at least one hardener to the mixture obtained in step a),
c) applying the mixture of step a) or opt b) to wood particles, and
d) pressing the wood particles at temperatures between 150 to 250 °C,

In an embodiment the aminotriazine aldehyde condensate of a) either already comprises the basic modulator before addition to the resin or the base is added after mixing the colloidal aminotriazine aldehyde condensate with the resin.

In an embodiment the hardener added to the mixture obtained in step a) is selected from a group comprising ammonium salts of acids, in particular of carbonic acids, sulfuric acids, sulfonic acids, hydrochloric acid, phosphoric acid, nitric acid or mixtures of the salts with the corresponding acids

The mixture obtained in step a) or opt. step b) is preferably applied to the wood particles or fibres by spraying or any other commonly known technique for applying adhesives or glues. For instance the mixture can be sprayed using suitable nozzles. It is also conceivable that the mixing only occurs within the nozzles. It is furthermore conceivable to apply the aldehyde containing glue / resin and the colloidal condensate separately to the wood particles, for instance by spraying the separate dispersions or solutions through respective nozzles arranged behind each other. It is furthermore possible to apply the adhesive or glue in blow line for production of MDF (medium density fibre) boards or HDF (high density fibre) boards.

In an embodiment of the present invention the time period between step b) and d) is 1 min to 2 h, in particular 5 min to 30 min. This time period is important in order to avoid precuring of the resin mixture. Thus, in order to obtain the optimal panel properties the wood particles should be preferably pressed within the given time period.

The object of the present invention can also be solved by a method for scavenging an aldehyde, in particular formaldehyde, in an aldehyde based resin, in particular a formaldehyde based resin, and/or in wood based panel containing said resin, whereby 0.25 to 15 wt% of at least one of the above described colloidal aminotriazine-aldehyde condensate is added to a dispersion of at least one aldehyde based resin in a solvent, which is subsequently applied to wood particles.

Furthermore, a method of accelerating the curing process of an aldehyde based resin, in particular a formaldehyde based resin, is provided comprising adding 0,25 to 15 wt% of at least one of the above described colloidal aminotriazine-aldehyde condensate to a dispersion of at least one aldehyde based resin in a solvent.

It is also provided a method for improving the mechanical properties of at least one wood based panel, in particular for reducing swelling in water, increasing internal bond strength and/or bending strength of said panel, comprising adding 0.25 to 15 wt% of at least one colloidal aminotriazine-aldehyde condensate as described to a dispersion of at least one aldehyde based resin in a solvent, applying said mixture on to wood particles and subsequent hot pressing the modified wood particles. In one embodiment the dispersion comprises at least one formaldehyde based adhesive and hydrophobic agents. The dispersion might also comprise at least one hardener, and at least one solvent.

According to another embodiment of the invention it is possible to mix the aldehyde based resin with the wood particles and to hot press the mixture. On the thus obtained panel the colloidal aminotriazine-aldehyde condensate is sprayed and subsequently the so coated panel is dried whereby final curing is achieved.

The present invention is further explained in more detail based on the following examples and the accompanied figures. It shows:
- Figure 1: Principle scheme of producing a resin according to the invention;
- Figure 2: Particle size distribution of the colloidal aminotriazine-aldehyde condensate comprising nitric acid; and
- Figure 3: Particle size distribution of the colloidal aminotriazine-aldehyde condensate comprising different acids in an amount of 100 mol% based on the melamine content

### Example 1 - Synthesis of a colloidal melamine resin modified urea formaldehyde glue (cMUF glue)

For the experimental set up commercially available UF glues are used; the urea : formaldehyde ratio is 1:1,07, the solids content of the glue is 66%. The composition of the binder system for the production of wood particle boards in the laboratory scale (e.g. additives, hydrophobic agent, curing agent, etc.) is held to industrial standard, therefore a dilution to with water to 50% solids is performed.

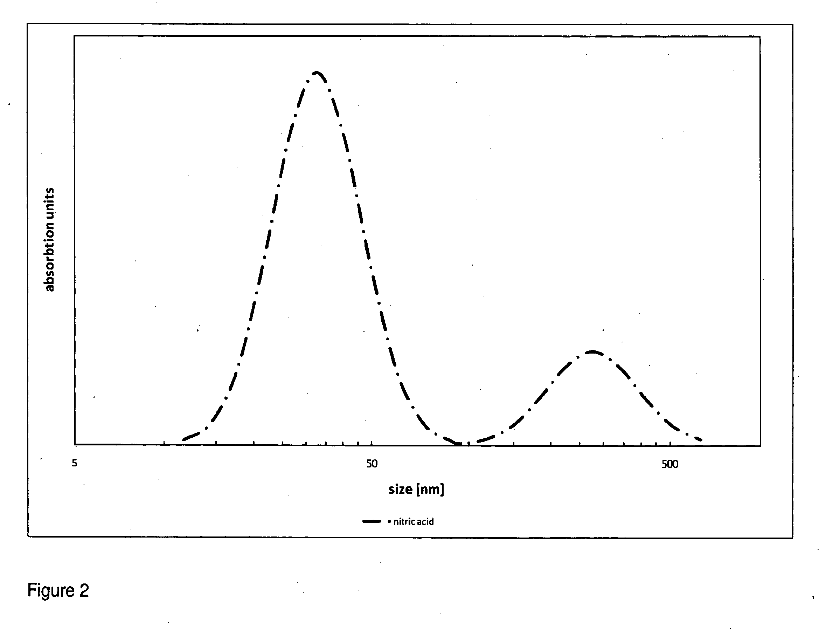

The colloidal melamine formaldehyde resin (cMF) ist synthesized from a Melamine formaldehyde precondensate (Melamine : Formaldehyde ratio of 1: 1,7, water tolerance = 1) and 100mol% (based on melamine content) of Nitric acid by cooking the mixture for 30 min at 85 °C. Concentration of the cMF is 5,5% solids. The particles are characterized by Ultrasonic attenuation measurements in a dispersion Technology DT1200 spectrometer at 23°C. The results are displayed in Table 1. Figure 2 shows the corresponding particle size distribution.

| | |
|---|---|
| Weight fraction | 5.5% |
| Zeta potential | 6.41 mV |
| Bimodal distribution | |
| - size mode small | 0.0327 µm |
| - size mode large | 0.276 µm |
| d10 | 0.0197 µm |
| d16 | 0.0218 µm |
| d50 | 0.0329 µm |
| d84 | 0.1985 µm |
| d90 | 0.2515 µm |
| Large size fraction | 0.2 |
| Fitting error | 1.8 |

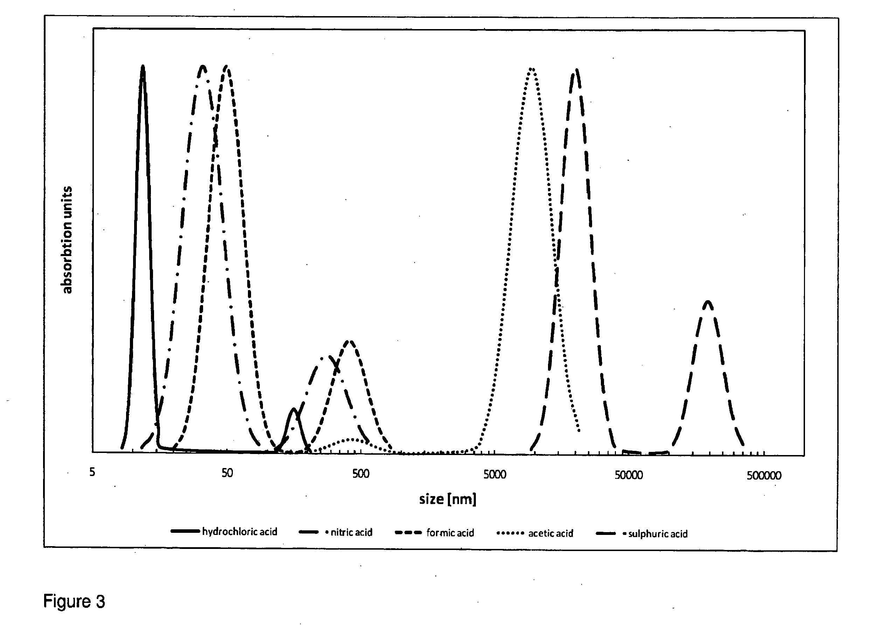

As mentioned previously also other acids can be used for obtaining the colloidal melamine glue. Depending on the type of acid and the amount of acid added the particle size distribution of the obtained colloidal composition changes. Figure 3 shows the particle size distribution when 100 mol% of the respective acid is used. The influence of the amount of acid added is obvious. Thus, hydrochloride and nitric acid provide the best results in respect to particle size and particle size distribution. However, due to the necessity of chloride free formulations, nitric acid is the preferred acid.

The cMF resin is then modified with 1.5 wt% (based on cMF solids) NH₃ as well as 5 and 7.5 wt% Lupasol P (see Table 2) and added to the glue in the phase of addition of other additives. The obtained cMUF glue comprises 2.9 wt% cMF and in total 50 wt% solids.

Ammonia is the preferred moderating base. When mixing the cMF with the glue NH₃ forms ammonium salts with the incorporated acid and therefore acts as a latent curing agent. Another advantage is the good availability and the low price.

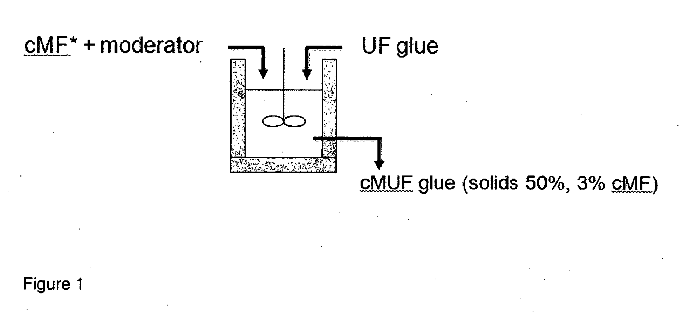

The principle experimental set up for cMUF manufacture is shown in Figure 1. Thus, the colloidal MF resin and the moderator in form of a suitable organic or inorganic base are added simultaneously with the UF glue to a stirring reactor. It is also possible to subsequently add the base, the glue and the curing agent to the colloidal Melamine formaldehyde precondensate.

The curing characteristics of cMUF glues have been studied by gel-time determination. The curing speed of cMUF glues is comparable to UF glues. Results are provided in Table 2.

**Table 2: curing speed comparison of industrial glues and cMUF glue (AN: ammonium nitrate, Lupasol P: Polyethylenimine, colloidal MF -nitric acid stabilized melamine formaldehyde condensate)**

| **Glue** | **Gel time [min]** |
|---|---|
| Industrial UF, 1% AN hardener | 1:10 |
| Industrial mUF, 3.5% AN hardener | 2:30 |
| Industrial UF + 3% colloidal MF, 1,5 wt% ammonia | 1:15 |
| Industrial UF + 3% colloidal MF, 5 wt% Lupasol P | 1:05 |
| Industrial UF + 3% colloidal MF, 7.5 wt% Lupasol P | 1:16 |

### Example 2 - production of a particle board using cMUF glue according to the invention

132g of a 5.5 wt% colloidal MF resin solution (stabilized with nitric acid, hydrochloric acid, formic acid or acetic acid) modified with 1.5 wt% NH₃ according to example 1 are added to 380,7 g of UF-glue (urea : formaldehyde ration = 1:1,1, 66% solids). 5.03g Ammonium nitrate (50% solution) based on glue solids is added to enhance curing. A mixture of 50 w% solids is obtained. The different glue formulations are sprayed on 2551g of wood particles. 10mm particle board with 36x36 cm are formed by pressing at 180°C for 130s for the above formulations. From these particle boards three test pieces/board weighing approx. 20g are cut. The pieces are tested according to EN 717-3 (flask method). The formaldehyde content of the samples is shown in Table 3.

### Comparative example 2

495.5 g of urea-formaldehyde glue, 158.56 g of water and 9.9 g ammonium nitrate as curing agent are mixed together and homogenised to receive a mixture of 50w% solids. With this glue formulation a particle board is pressed under the same conditions as in Example 2.

**Table 3: Formaldehyde content in the particle board, tested according to EN717-3**

| **Test pieces** | colloidal MF stabilized with | **Formaldehyde emission (mg/1000g PB)** |
|---|---|---|
| Example 2, piece 1 | nitric acid | 4,25 |
| Example 2, piece 2 | nitric acid | 3,05 |
| Example 2, piece 3 | nitric acid | 4,08 |
| Example 2, piece 4 | hydrochloric acid | 4,35 |
| Example 2, piece 5 | hydrochloric acid | 4,05 |
| Example 2, piece 6 | hydrochloric acid | 4,40 |
| Example 2, piece 7 | formic acid | 4,95 |
| Example 2, piece 8 | formic acid | 4,80 |
| Example 2, piece 9 | formic acid | 4,68 |
| Example 2, piece 10 | acetic acid | 5,05 |
| Example 2, piece 11 | acetic acid | 4,95 |
| Example 2, piece 12 | acetic acid | 5,10 |
| Comparative example 2, piece 13 | without | 8,39 |
| Comparative example 2, piece 14 | without | 7,36 |
| Comparative example 2, piece 15 | without | 9,35 |

As can be seen from the results provided in Table 3 the formaldehyde emission from the particle boards containing UF glue with cMF is reduced by approximately 50% in comparison to the conventional UF glue without cMF.

## Claims

1. Colloidal aminotriazine-aldehyde condensate
**characterized in that,**
- the aminotriazine : aldehyde ratio of the condensate is in the range between 1:1.3 to 1 : 2, preferably 1 : 1,8, most preferably 1 : 1,7,
- said condensate comprises at least one acid in an amount between 50 to 200 mol% based on the melamine content,
- the average particle diameter d₅₀ of said condensate is less than 100 nm, preferably less than 80 nm, most preferably less than 50 nm, and
- wherein the colloidal condensate is cationic.

2. Colloidal condensate according to claim 1, **characterized in that**, the zeta-potential of the colloidal condensate is between 3 and 50 mV, preferably between 5 and 20 mV.

3. Colloidal condensate according to claim 1 or 2, **characterized in that**, the at least one acid is an inorganic acid, preferably selected from the group comprising nitric acid, phosphoric acid, sulfuric acid or hydrochloric acid, or an organic acid, preferably selected from the group comprising acetic acid and formic acid.

4. Colloidal condensate according to one of the preceding claims, **characterized in that** the at least one acid is added in an amount between 50 to 100 mol% or 150 to 200 mol% based on the melamine content in dependency on the acid being used.

5. Colloidal condensate according to one of the preceding claims, **characterized in that**, the condensate comprises at least one inorganic and/or at least one organic base as modulator or stabilisator, in particular a base is selected from a group comprising polyamines, in particular polyethylenimin, monomeric amines, in particular ethanolamine, or ammonia.

6. Method for obtaining at least one colloidal aminotriazine-aldehyde, condensate according to one of the claims 1 to 5 comprising the steps:
a) reacting at least one aminotriazine with at least one aldehyde in a ratio 1 : 2, preferably 1 : 1,8, most preferably 1 : 1,7 under formation of at least one aminotriazine-aldehyde-precondensate,
b) adding at least one acid to the precondensate,
c) heating the mixture of step b)
d) opt. adding at least one inorganic and/or at least one organic base, and
e) isolating the obtained particles.

7. Use of at least one colloidal aminotriazine-aldehyde condensate as an aldehyde scavenger, in particular as formaldehyde scavenger.

8. Use according to claim 7, **characterized in that** at least one colloidal aminotriazine-aldehyde condensate according to one of the claims 1 to 5 is used as aldehyde scavenger.

9. Use according to claim 7 or 8, **characterized in that** the at least one colloidal aminotriazine-aldehyde condensate is used as an aldehyde scavenger in an aldehyde resin and/or in wood based panels, in particular particle board, OSB, LDF, MDF, HDF, plywood.

10. Use of at least one colloidal aminotriazine-aldehyde condensate, in particular according to one of claims 1 to 5, as curing agent and/or hardener for at least one aldehyde containing resin, in particular formaldehyde containing resin.

11. Wood based panel comprising at least one colloidal aminotriazine-aldehyde condensate, in particular according to one of the claims 1 to 5.

12. Resin, in particular a formaldehyde containing resin, comprising at least one colloidal aminotriazine-aldehyde condensate, according to one of the claims 1 to 5.

13. Wood based panel comprising at least one resin according to claim 12.

14. Method for obtaining a wood based panel according to claim 13 comprising the following steps:
a) adding at least one colloidal aminotriazine aldehyde condensate, in particular according to one of the claims 1 to 5 to an aldehyde containing resin,
b) opt. adding at least one hardener to the mixture obtained in step a),
c) applying the mixture of step a) or opt. b) to wood particles, and
d) pressing the wood particles at temperatures between 150 to 250°C.

15. Method according to claim 14, **characterized in that**, the time period between step b) and d) is 10 min to 10 h, in particular 30 min to 5 h.

## Patentansprüche

1. Kolloidales Aminotriazin-Aldehyd-Kondensat
**dadurch gekennzeichnet, dass**
- das Aminotriazin:Aldehyd-Verhältnis des Kondensats in dem Bereich zwischen 1:1,3 bis 1:2, bevorzugt 1:1,8, besonders bevorzugt 1:1,7 ist,
- das Kondensat mindestens eine Säure in einer Menge zwischen 50 bis 200 Mol% basierend auf dem Melamingehalt umfasst,
- der durchschnittliche Partikeldurchmesser d₅₀ des Kondensats geringer als 100 nm, bevorzugt geringer als 80 nm, besonders bevorzugt geringer als 50 nm ist, wie mittels Ultraschalldämpfungsmessungen in einem Dispersionstechnologie-DT1200-Spektrometer bei 23 °C erhalten, und
- wobei das kolloidale Kondensat kationisch ist.

2. Kolloidales Kondensat gemäß Anspruch 1, **dadurch gekennzeichnet, dass** das Zeta-Potential des kolloidalen Kondensats zwischen 3 und 50 mV, bevorzugt zwischen 5 und 20 mV ist.

3. Kolloidales Kondensat gemäß Anspruch 1 oder 2, **dadurch gekennzeichnet, dass** die mindestens eine Säure eine anorganische Säure, bevorzugt ausgewählt aus der Gruppe umfassend Salpetersäure, Phosphorsäure, Schwefelsäure oder Salzsäure ist, oder eine organische Säure ist, bevorzugt ausgewählt aus der Gruppe umfassend Essigsäure und Ameisensäure.

4. Kolloidales Kondensat gemäß einem der vorhergehenden Ansprüche, **dadurch gekennzeichnet, dass** die mindestens eine Säure in einer Menge zwischen 50 bis 100 Mol% oder 150 bis 200 Mol% basierend auf den Melamingehalt in Abhängigkeit von der verwendeten Säure zugegeben wird.

5. Kolloidales Kondensat gemäß einem der vorhergehenden Ansprüche, **dadurch gekennzeichnet, dass** das Kondensat mindestens eine anorganische und/oder mindestens eine organische Base als Modulator oder Stabilisator umfasst, insbesondere eine Base ausgewählt aus einer Gruppe umfassend Polyamine, insbesondere Polyethylenimin, monomere Amine, insbesondere Ethanolamin, oder Ammoniak.

6. Verfahren zum Herstellen von mindestens einem kolloidalen Aminotriazin-Aldehydkondensat gemäß einem der Ansprüche 1 bis 5 umfassend die Schritte:
a) Reagieren von mindestens einem Aminotriazin mit mindestens einem Aldehyd in einem Verhältnis 1:2, bevorzugt 1:1,8, besonders bevorzugt 1:1,7 unter Ausbildung von mindestens einem Aminotriazin-Aldehyd-Vorkondensat,
b) Zugabe von mindestens einer Säure zu dem Vorkondensat,
c) Erwärmen der Mischung von Schritt b),
d) optionale Zugabe von mindestens einer anorganischen und/oder mindestens einer organischen Base, und
e) Isolierung der erhaltenen Partikel.

7. Verwendung von mindestens einem kolloidalen Aminotriazin-Aldehydkondensat als ein Aldehyd-Scavenger, insbesondere als Formaldehyd-Scavenger.

8. Verwendung gemäß Anspruch 7, **dadurch gekennzeichnet, dass** mindestens ein kolloidales Aminotriazin-Aldehydkondensat gemäß einem der Ansprüche 1 bis 5 als Aldehyd-Scavenger verwendet wird.

9. Verwendung gemäß Anspruch 7 oder 8, **dadurch gekennzeichnet, dass** das mindestens eine kolloidale Aminotriazin-Aldehydkondensat als ein Aldehyd-Scavenger in einem Aldehydharz und/oder in Holzwerkstoffpaneelen, insbesondere Spanplatten, OSB, LDF, MDF, HDF, Sperrholz, verwendet wird.

10. Verwendung von mindestens einem kolloidalen Aminotriazin-Aldehydkondensat, insbesondere gemäß einem der Ansprüche 1 bis 5, als Härtungsmittel und/oder Härter für mindestens ein Aldehyd enthaltendes Harz, insbesondere Formaldehyd enthaltendes Harz.

11. Holzwerkstoffpaneel umfassend mindestens ein kolloidales Aminotriazin-Aldehydkondensat, insbesondere gemäß einem der Ansprüche 1 bis 5.

12. Harz, insbesondere ein Formaldehyd enthaltendes Harz, umfassend mindestens ein kolloidales Aminotriazin-Aldehydkondensat gemäß einem der Ansprüche 1 bis 5.

13. Holzwerkstoffpaneel umfassend mindestens ein Harz gemäß Anspruch 12.

14. Verfahren zum Herstellen eines Holzwerkstoffpaneels gemäß Anspruch 13 umfassend die folgenden Schritte:
a) Zugabe von mindestens einem kolloidalen Aminotriazin-Aldehydkondensat, insbesondere gemäß einem der Ansprüche 1 bis 5, zu einem Aldehyd enthaltendem Harz,
b) optionale Zugabe von mindestens einem Härter zu der Mischung erhalten in Schritt a),
c) Auftragen der Mischung aus Schritt a) oder optional b) auf Holzpartikel, und
d) Verpressen der Holzpartikel bei Temperaturen zwischen 150 bis 250 °C.

15. Verfahren gemäß Anspruch 14, **dadurch gekennzeichnet, dass** der Zeitabstand zwischen Schritt b) und d) 10 min bis 10 h, insbesondere 30 min bis 5 h ist.

## Revendications

1. Condensat d'aminotriazine-aldéhyde colloïdal
**caractérisé en ce que**,
- le rapport aminotriazine/aldéhyde du condensat est situé dans la plage de valeurs allant de 1/1,3 à 1/2, de préférence est de 1/1,8, et de manière davantage préférée est de 1/1,7,
- ledit condensat comprend au moins un acide en une quantité allant de 50 % à 200 % en mole sur la base de la teneur en mélamine,
- le diamètre particulaire moyen d₅₀ dudit condensat est inférieur à 100 nm, de préférence inférieur à 80 nm, de manière davantage préférée inférieur à 50 nm, tel qu'obtenu par des mesures d'atténuation ultrasonore dans un spectromètre DT1200 à technologie de dispersion à 23 °C et
- dans lequel le condensat colloïdal est cationique.

2. Condensat colloïdal selon la revendication 1, **caractérisé en ce que** le potentiel zêta du condensat colloïdal est situé entre 3 mV et 50 mV, de préférence entre 5 mV et 20 mV.

3. Condensat colloïdal selon la revendication 1 ou 2, **caractérisé en ce que** le au moins un acide est un acide inorganique choisi de préférence dans le groupe comprenant l'acide nitrique, l'acide phosphorique, l'acide sulfurique et l'acide chlorhydrique, ou un acide organique choisi de préférence dans le groupe comprenant l'acide acétique et l'acide formique.

4. Condensat colloïdal selon l'une quelconque des revendications précédentes, **caractérisé en ce que** le au moins un acide est ajouté en une quantité allant de 50 % à 100 % en mole ou de 150 % à 200 % en mole sur la base de la teneur en mélamine en fonction de l'acide utilisé.

5. Condensat colloïdal selon l'une quelconque des revendications précédentes, **caractérisé en ce que** le condensat comprend au moins une base inorganique et/ou au moins une base organique en tant que modulateur ou stabilisateur, en particulier une base choisie dans le groupe comprenant les polyamines, en particulier une polyéthylèneimine, les amines monomères, en particulier l'éthanolamine, ou l'ammoniac.

6. Procédé d'obtention d'au moins un condensat d'aminotriazine-aldéhyde colloïdal selon l'une quelconque des revendications 1 à 5, comprenant les étapes suivantes :
a) la réaction d'au moins une aminotriazine avec au moins un aldéhyde dans un rapport de 1/2, de préférence de 1/1,8, et de manière davantage préférée de 1/1,7, pour former au moins un précondensat d'aminotriazine-aldéhyde,
b) l'ajout d'au moins un acide au précondensat,
c) le chauffage du mélange de l'étape b)
d) optionnellement, l'ajout d'au moins une base inorganique et/ou d'au moins une base organique, et
e) l'isolement des particules obtenues.

7. Utilisation d'au moins un condensat d'aminotriazine-aldéhyde colloïdal comme capteur d'aldéhyde, en particulier comme capteur de formaldéhyde.

8. Utilisation selon la revendication 7, **caractérisée en ce qu'**au moins un condensat d'aminotriazine-aldéhyde colloïdal selon l'une quelconque des revendications 1 à 5 est utilisé comme capteur d'aldéhyde.

9. Utilisation selon la revendication 7 ou 8, **caractérisée en ce que** le au moins un condensat d'aminotriazine-aldéhyde colloïdal est utilisé comme capteur d'aldéhyde dans une résine aldéhydique et/ou des panneaux à base de bois, en particulier un panneau de particules, un OSB, un LDF, un MDF, un HDF, un contreplaqué.

10. Utilisation d'au moins un condensat d'aminotriazine-aldéhyde colloïdal, en particulier selon l'une quelconque des revendications 1 à 5, comme agent de durcissement et/ou durcisseur pour au moins une résine contenant un aldéhyde, en particulier une résine contenant du formaldéhyde.

11. Panneau à base de bois, comprenant au moins un condensat d'aminotriazine-aldéhyde colloïdal, en particulier selon l'une quelconque des revendications 1 à 5.

12. Résine, en particulier une résine contenant du formaldéhyde, comprenant au moins un condensat d'aminotriazine-aldéhyde colloïdal selon l'une quelconque des revendications 1 à 5.

13. Panneau à base de bois, comprenant au moins une résine selon la revendication 12.

14. Procédé d'obtention d'un panneau à base de bois selon la revendication 13, comprenant les étapes suivantes :
a) l'ajout d'au moins un condensat d'aminotriazine-aldéhyde colloïdal, en particulier selon l'une quelconque des revendications 1 à 5, à une résine contenant un aldéhyde ;
b) optionnellement, l'ajout d'au moins un durcisseur au mélange obtenu dans l'étape a),
c) l'application du mélange obtenu à l'étape a) ou à l'étape b) optionnelle sur des particules de bois, et
d) le pressage des particules de bois à une température située entre 150 °C et 250 °C.

15. Procédé selon la revendication 14, **caractérisé en ce que** la période de temps entre l'étape b) et l'étape d) est de 10 minutes à 10 heures, en particulier de 30 minutes à 5 heures.
